# EUROPÄISCHE PATENTANMELDUNG

(11) **EP 4 830 997 A1**
(43) Veröffentlichungstag der Anmeldung: **28.10.2026**
(21) Anmeldenummer: 26164247.4
(22) Anmeldetag: 12.03.2026
(51) Int. Cl.: B60N 2/66, B60N 2/90

(54) **MODULTRÄGERANORDNUNG**

(30) Priorität: 25.04.2025 DE 102025116028
(71) Anmelder: Faurecia Autositze GmbH, 30419 Hannover (DE)
(72) Erfinder: Ceglarek, Piotr, 40-807 Katowice (PL); Stasinski, Tomasz, 58-200 Dzierzoniaw (PL); Filip, Slawomir, 08-110 Grabianow (PL); Kowalski, Tomasz, 58-306 Walbrzych (PL); Szott, Michal, 05-600 Grojec (PL)
(74) Vertreter: Schober, Mirko

(57) **Zusammenfassung**

Eine Modulträgeranordnung (1) dient zur Anbringung an der Struktur eines Kraftfahrzeugsitzes. Dabei weist die Modulträgeranordnung (1) einen Modulträger (2) auf, in welchen Fluidkanäle (3a, 3b) zur Führung von Fluid, bevorzugt Luft, integriert sind. Der Modulträger (2) weist wenigstens einen ersten Befestigungsabschnitt (21; 21a; 21b) und wenigstens einen zweiten Befestigungsabschnitt (21c; 22) auf. Dabei ist jeder erste Befestigungsabschnitt (21; 21a; 21b) zum Befestigen von einem ersten Ventilblock (8) am Modulträger (2) und jeder zweite Befestigungsabschnitt (21c; 22) zum Befestigen von einem vom ersten Ventilblock (8) verschiedenen zweiten Ventilblock (9) am Modulträger (2) ausgebildet. Die ersten und zweiten Befestigungsabschnitte (21, 22; 21a; 21b; 21c) sind so am Modulträger (2) angeordnet, dass sie die Befestigung von Ventilblöcken (8, 9) verschiedener Baugrößen oder Modellvarianten am Modulträger (2) ermöglichen.

## Beschreibung

Die Erfindung betrifft eine Modulträgeranordnung.

Entsprechende Modulträgeranordnungen, wie z.B. aus EP 4 349 649 A1 bekannt, weisen einen Modulträger auf, der eine ganze Reihe von üblicherweise pneumatischen Komponenten aufnehmen kann und trägt. Bekannt ist, Fluidkanäle, z.B. Luftführungskanäle, in solchen Modulträger zu integrieren. Üblicherweise sind solche Modulträger aus einem Kunststoffmaterial gefertigt, sodass sich über übliche Formgebungsverfahren wie Spritzgießen oder dergleichen auch interne Strukturen an- bzw. einformen lassen. Solche Modulträgeranordnungen werden dann üblicherweise mit der Sitzstruktur eines Fahrzeugsitzes verbunden. Bekannt ist außerdem, dass Modulträger zur Befestigung bestimmter Komponenten, wie z.B. Pumpen dienen. Auch werden üblicherweise fluidbefüllbare Blasen für Sitzverstell- oder Massagesysteme an solchen Modulträgern befestigt.

Je nach Ausstattung der Modulträgeranordnung müssen am Modulträger mehr oder weniger Komponenten befestigt werden. In der Regel muss dazu ein auf die gewünschte Bestückung des Modulträgers, also die anzubringenden Komponenten, zugeschnittener Modulträger hergestellt werden. Dies ist nachteilig, da je nach Anforderungsprofil unterschiedliche Modulträger gefertigt werden müssen.

Aufgabe der vorliegenden Erfindung ist es, diese Nachteile zu vermeiden und eine Modulträgeranordnung zu schaffen, mit deren Hilfe sich eine Mehrzahl unterschiedlicher Ausstattungsvarianten eines Fahrzeugsitzes realisieren lässt.

Gelöst wird diese Aufgabe durch eine Modulträgeranordnung mit den Merkmalen des Anspruchs 1. Vorteilhafte Ausführungsformen finden sich in den abhängigen Ansprüchen.

Die erfindungsgemäße Modulträgeranordnung zeichnet sich dadurch aus, dass sie bereits einen hohen Vorfertigungsgrad aufweist, in dem bereits Befestigungsabschnitte für eine Mehrzahl unterschiedlicher Ventilblöcke vorhanden sind. Dadurch wird ermöglicht, dass unterschiedliche Ausstattungsvarianten am Modulträger möglich sind, da beispielsweise sowohl Verstellungen eines Sitzes über fluidbefüllbare Blasen, Vibrationsalarm über fluidbefüllbare Blasen und Massageeinrichtungen über fluidbefüllbare Blasen über unterschiedliche Ventilblöcke angesteuert und versorgt werden können.

Erfindungsgemäß weist die Modulträgeranordnung zur Anbringung an der Struktur eines Kraftfahrzeugsitzes einen Modulträger auf, in welchen Fluidkanäle zur Führung von Fluid, bevorzugt Luft, integriert sind. Der Modulträger weist dabei wenigstens einen ersten Befestigungsabschnitt und wenigstens einen zweiten Befestigungsabschnitt auf. (Je)der erste Befestigungsabschnitt ist zum Befestigen von einem ersten Ventilblock am Modulträger und (je)der zweite Befestigungsabschnitt zum Befestigen von einem vom ersten Ventilblock verschiedenen zweiten Ventilblock am Modulträger ausgebildet.

Alternativ oder ergänzend kann vorgesehen sein, dass die ersten und zweiten Befestigungsabschnitte so am Modulträger angeordnet sind, dass sie die Befestigung von Ventilblöcken verschiedener Baugrößen oder Modellvarianten am Modulträger ermöglichen. Dies kann zum Beispiel dadurch geschehen, dass man Befestigungsabschnitte am Modulträger, bevorzugt dessen Rückseite, in einer Matrixstruktur anordnet, sodass für Ventilblöcke mit unterschiedlichen äußeren Abmessungen dann verschiedene am Modulträger genutzt werden können. Für die Befestigungsabschnitte gilt generell, dass diese am Modulträger befestigt sein können, sie können allerdings auch am Modulträger angeformt oder eingeformt sein. Dies vereinfacht die Herstellung.

Auf die geschilderte Weise lassen sich mit einem einzigen Modulträger unterschiedliche Ausstattungsvarianten einer erfindungsgemäßen Modulträgeranordnung realisieren.

Nach einer bevorzugten Ausführungsform der vorliegenden Erfindung ist vorgesehen, dass an wenigstens einem ersten Befestigungsabschnitt ein erster Ventilblock und/oder an wenigstens einem zweiten Befestigungsabschnitt ein zweiter Ventilblock angebracht ist. Beispielsweise kann ein solcher Befestigungsabschnitt als Durchgangsloch ausgebildet werden, an welchem ein entsprechender Ventilblock dann beispielsweise mithilfe von Schrauben oder Clips oder anderweitig werkzeuglos oder mithilfe von Werkzeugen befestigt wird. Andere Befestigungslösungen sind natürlich ebenfalls denkbar. Bevorzugt gibt es eine Mehrzahl erste Befestigungsabschnitte und/oder eine Mehrzahl zweite Befestigungsabschnitte. Gerade bei einer Mehrzahl von Befestigungsabschnitten lassen sich Ventilblöcke auf besonders sichere Weise befestigen.

Am Modulträger kann nach einer vorteilhaften Weiterbildung wenigstens ein dritter Befestigungsabschnitt zur Befestigung einer Fluidpumpe vorhanden sein. Gemäß einer Ausführungsform ist auch eine Fluidpumpe am dritten Befestigungsabschnitt angebracht. Die Fluidpumpe kann bevorzugt so angeordnet sein, dass sie bei der Befestigung am dritten Befestigungsabschnitt unmittelbar mit einem Fluidkanal in Verbindung gebracht wird.

Eine weitere bevorzugte Ausführungsform der vorliegenden Erfindung sieht für die erfindungsgemäße Modulträgeranordnung vor, dass am Modulträger im Bereich der einen Enden der integrierten Fluidkanäle Blasenbefestigungsabschnitte zur Befestigung von fluidbefüllbaren Blasen am Modulträger und Herstellung einer fluidleitenden Verbindung zwischen den fluidbefüllbaren Blasen und den Fluidkanälen vorhanden sind. Fluidbefüllbbare Blasen sind flexible Gebilde, welche ein Fluid, im Rahmen dieser Erfindung bevorzugt Luft, aufnehmen können und sich dabei ausdehnen bzw. bei Entfernen des entsprechenden Fluid aus einer solchen Blase zusammenziehen. Bevorzugt können diese fluidbefüllbaren Blasen über denselben vorhandenen Verbindungsabschnitt mit den Blasenbefestigungsabschnitten des Modulträgers werkzeuglos oder mittels eines Werkzeugs fluidleitend verbunden werden. Dabei kann vorgesehen sein, dass an wenigstens einem der Blasenbefestigungsabschnitte wenigstens eine fluidbefüllbare Blase angebracht ist.

Einer weiteren bevorzugten Ausführungsform der erfindungsgemäßen Modulträgeranordnung zufolge ist es möglich, dass die ersten und/oder zweiten Befestigungsabschnitte so angeordnet sind, dass beim Befestigen eines Ventilblocks der jeweilige Ventilblock automatisch mit wenigstens einem der Fluidkanäle fluidtechnisch verbunden wird. Dies sorgt für eine hochintegrative Ausgestaltung des erfindungsgemäßen Modulträgers und eine Vereinfachung der Montage. Da in der Regel die Befestigungsabschnitte so angeordnet sind, dass ein entsprechender Ventilblock automatisch in der richtigen Position fixiert wird, wenn er mit dem Befestigungsabschnitt verbunden ist, kann auf diese Weise auch die ordnungsgemäße Ausrichtung des Ventilblocks in Bezug auf die Fluidkanäle vorgenommen werden, die mit dem Ventilblock zu verbinden sind.

Nach einer weiteren bevorzugten Ausführungsform der erfindungsgemäßen Modulträgeranordnung kann vorgesehen sein, dass vierte Befestigungsabschnitte am Modulträger angeordnet sind. Diese vierten Befestigungsabschnitte sind zur Aufnahme und Befestigung einer Drahtaufhängung am Modulträger ausgebildet. Die Drahtaufhängung dient der Aufhängung des Modulträgers an der Struktur eines Kraftfahrzeugsitzes. Üblicherweise besteht die Drahtaufhängung in einem gebogenen Draht, welcher durch die vierten Befestigungsabschnitte geführt ist. Solche Befestigungsabschnitte können am Modulträger angebracht oder angeformt sein. Dies erhöht den Integrationsgrad zusätzlich.

Unterschiedliche Sitzanforderungen können bedingen, dass Drahtaufhängungen unterschiedlicher Ausbildung am selben Modulträger befestigt sein sollen. Solche Drahtaufhängungen weisen dann Drähte auf, die unterschiedliche Biegungen haben.

Um den erfindungsgemäßen Modulträger der Modulträgeranordnung noch universeller auszubilden, kann vorgesehen sein, dass von den vierten Befestigungsabschnitten verschiedene fünfte Befestigungsabschnitte am Modulträger angeordnet sind, die zur Aufnahme und Befestigung einer Drahtaufhängung am Modulträger ausgebildet sind. Je nach Biegung des Drahtes kann dann die Drahtaufhängung über einige oder alle vierten Befestigungsabschnitte und über einige oder alle fünften Befestigungsabschnitte am Modulträger angebracht werden. Bevorzugt weist die Modulträgeranordnung dann eine Drahtaufhängung mit einem Draht auf, der an einigen oder allen vierten Befestigungsabschnitten und/oder an einigen oder allen fünften Befestigungsabschnitten angebracht ist.

Eine weitere bevorzugte Ausführungsform der vorliegenden Erfindung sieht vor, dass die integrierten Fluidkanäle teilweise oder vollständig von einer Abdeckung oder einer Mehrzahl Abdeckungen abgedeckt sind. Die Fluidkanäle liegen in diesem Fall in dem Modulträger als Vertiefungen vor und werden durch die genannte Abdeckung bzw. die genannten Abdeckungen komplettiert. Hierdurch lassen sich weitere Modellvarianten abbilden, beispielsweise können am Modulträger Vertiefungen für Fluidkanäle vorgesehen sein, von denen lediglich ein Teil oder alle Kanäle durch eine Abdeckung abgedeckt sind. Wenn beispielsweise lediglich eine Lordosenverstellung benötigt wird, können die nicht benötigten Fluidkanäle, die nicht mit entsprechenden Blasen verbunden sind, unabgedeckt bleiben. Gleiches gilt für Sitze, in denen lediglich eine Massageeinrichtung benötigt wird, entsprechend. Bei Modellvarianten mit beiden oben genannten Eigenschaften empfiehlt es sich, eine Abdeckung zu wählen, die alle Fluidkanäle vollständig abdeckt.

Ferner betrifft die Erfindung einen Kraftfahrzeugsitz mit einer Sitzstruktur, an welcher eine Modulträgeranordnung nach einem der vorigen Ansprüche angebracht ist.

Die Erfindung wird nachfolgend anhand der Figuren 1-13 näher erläutert.
- Figur 1: - zeigt eine erste Ausführungsform einer erfindungsgemäßen Modulträgeranordnung,
- Figur 2: - zeigt eine zweite Ausführungsform einer erfindungsgemäßen Modulträgeranordnung,
- Figur 3: - zeigt eine dritte Ausführungsform einer erfindungsgemäßen Modulträgeranordnung,
- Figur 4: - zeigt eine vierte Ausführungsform einer erfindungsgemäßen Modulträgeranordnung,
- Figur 5: - zeigt eine Ansicht auf eine mögliche Ausführungsform eines Modulträgers einer erfindungsgemäßen Modulträgeranordnung,
- Figur 6: - zeigt eine perspektivische Ansicht gemäß Figur 5 mit an dem Modulträger befestigten Ventilblöcken,
- Figur 7: - zeigt eine Ausführungsform eines Modulträgers mit einer vollständigen Abdeckung von integrierten Fluidkanälen,
- Figur 8: - zeigt eine Ausführungsform eines Modulträgers mit einer teilweisen Abdeckung von integrierten Fluidkanälen,
- Figur 9: - zeigt eine Ausführungsform eines Modulträgers mit einer ersten Drahtaufhängung,
- Figur 10: - zeigt eine Ausführungsform eines Modulträgers mit einer zweiten Drahtaufhängung,
- Figur 11: - zeigt eine Ausführungsform des Modulträgers mit einer Mehrzahl Befestigungsabschnitte
- Figur 12: - zeigt den Modulträger aus Figur 11, an welchem ein erster Ventilblock befestigt ist,
- Figur 13: - zeigt den Modulträger aus Figur 11, an welchem ein zweiter Ventilblock befestigt ist.

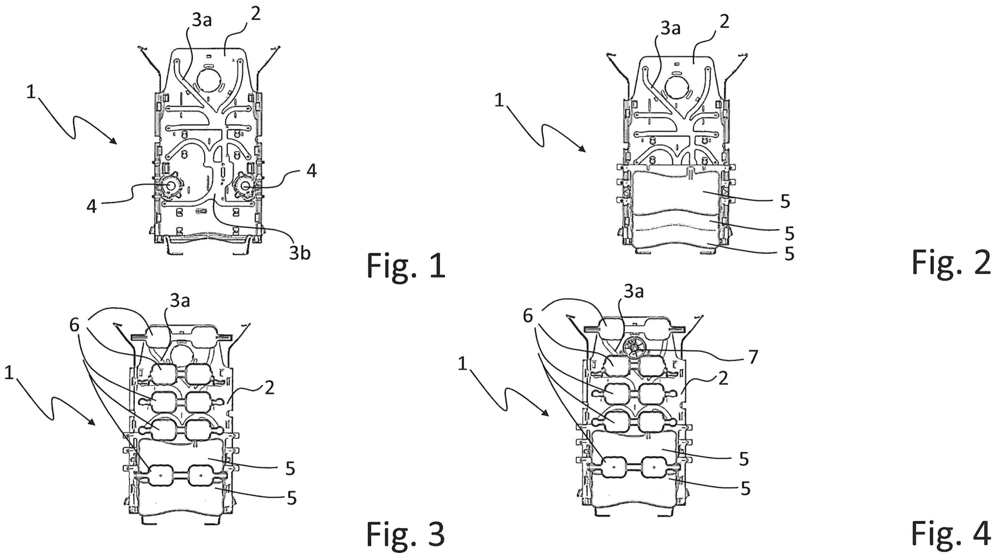

In den Figuren 1-4 sind verschiedene Ausführungsalternativen einer erfindungsgemäßen Modulträgeranordnung 1 dargestellt.

In Figur 1 weist die Modulträgeranordnung 1 einen Modulträger 2 auf, in welchen die Luftführungskanäle 3a, 3b integriert sind. Zudem sind Vibrationselemente 4 vorgesehen, die zum Beispiel in Gestalt von fluidbefüllbaren Blasen oder auch elektrischen Vibrationselementen, an dem Modulträger 2 angebracht sind. Diese Vibrationselemente 4 dienen beispielsweise der Ausgabe von haptischen Signalen an den Sitzinsassen, welcher in dem Kraftfahrzeugsitz sitzt, in welchem die Modulträgeranordnung 1 untergebracht ist. Solche haptischen Signale können zum Beispiel eine Gefahrensituation anzeigen.

In Figur 2 ist eine Modulträgeranordnung 1 dargestellt, die neben den Luftführungskanälen 3a mehrere fluidbefüllbare Blasen 5 aufweist, die hier als Lordosenverstellblasen zur Verstellung und Anpassung des Sitzkomfort im unteren Rückenbereich dienen. Diese Blasen 5 werden über die Luftführungskanäle 3a beschickt oder über diese entleert.

Figur 3 zeigt ein Ausführungsbeispiel, bei welchem die Modulträgeranordnung neben den Lordosenblasen 5 noch weitere fluidbefüllbare Blasen 6 aufweist, die ebenfalls am Modulträger 2 angeordnet sind und mit den Luftführungskanälen 3a fluidtechnischer Verbindung stehen.

Schließlich ist im Ausführungsbeispiel der Figur 4 eine Ausführung gezeigt, in welcher zusätzlich zur Konfiguration gemäß Figur 3 auch noch eine hier als Ventilator 7 dargestellte Sitzbelüftung im Modulträger 2 integriert ist.

Es ist unmittelbar einsichtig, dass es von Vorteil ist, wenn alle genannten Ausführungsvarianten über denselben Modulträger 2 ausgeführt werden könnten. Der entsprechende Modulträger 2 muss dazu auf eine bestimmte Art und Weise vorkonfiguriert sein, vor allem muss dieser in der Lage sein, unterschiedliche Komponenten 4, 5, 6, 7 separat oder gleichzeitig aufnehmen zu können. Das setzt vor allem auch voraus, dass das Luftführungssystem unter Umständen relativ kompliziert ist, sodass die Integration von Luftführungskanälen 3a, 3b alleine noch nicht genügt, um die unterschiedlichen Funktionalitäten grundsätzlich darstellen zu können.

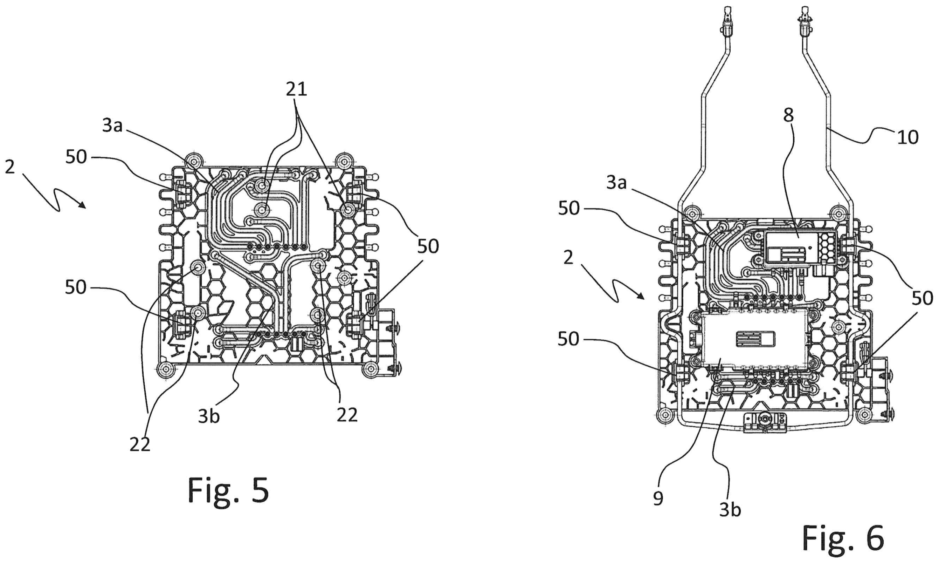

Erfindungsgemäß wird daher ein Modulträger 2 vorgeschlagen, wie er in einer beispielhaften Variante in den Figuren 5 und 6 dargestellt ist. Dort erkennt man auch wieder die integrierten Luftführungskanäle 3a, 3b sowie Befestigungsabschnitte 21, 22. Im gezeigten Beispiel sind diese Befestigungsabschnitte 21, 22 durch im Träger 2 integrierte Löcher realisiert. Andere Realisierungsmöglichkeiten sind natürlich ebenso denkbar, beispielsweise Laschen, Clipse oder dergleichen. 50 bezeichnet Befestigungsabschnitte zur Befestigung einer Drahtaufhängung 10 (vgl. Figur 6). Diese Befestigungsabschnitte können wie die anderen, vorher oder nachfolgend beschriebenen, Befestigungsabschnitte auch einstückiger Teil des Modulträgers 2 sein, indem sie dort angeformt oder eingeformt sind, können natürlich ebenso am Modulträger 2 anderweitig befestigt sein.

Wie man in Figur 6 erkennt, ist ein erster Ventilblock 8 an ersten Befestigungsabschnitten 21 und ein zweiter Ventilblock 9 an den zweiten Befestigungsabschnitten 22 angebracht. In den Ventilblöcken 8, 9 befinden sich pneumatische Schaltele-mente wie Ventile oder dergleichen, über welche die Versorgung der Luftführungskanäle 3a, 3b mit Fluid, bevorzugt Luft, geschieht. Je nach Anwendungsfall kann beispielsweise vorgesehen sein, dass über den einen Ventilblock 8 beispielsweise eine Lordosenverstellung und über den zweiten Ventilblock 9 eine Massageeinrichtung betätigt wird. Entsprechend ist die räumliche Anordnung der Ventilblöcke 8, 9 daher so, dass die-se eine Fluidverbindung zu entsprechenden Luftführungskanälen 3a, 3b aufbauen, die im Modulträger 2 integriert sind. Die Befestigungsabschnitte 50 halten den Draht 10 der Drahtaufhängung, mit welcher der gezeigte Modulträger 2 an der Struktur eines Fahrzeugsitzes angebracht werden kann. Bei den Befestigungsabschnitten 50 kann es sich um Öffnungen, Clipse oder andere Durchführungen handeln, die dazu geeignet sind, den Draht 10 einer Drahtaufhängung zu halten und zu fixieren.

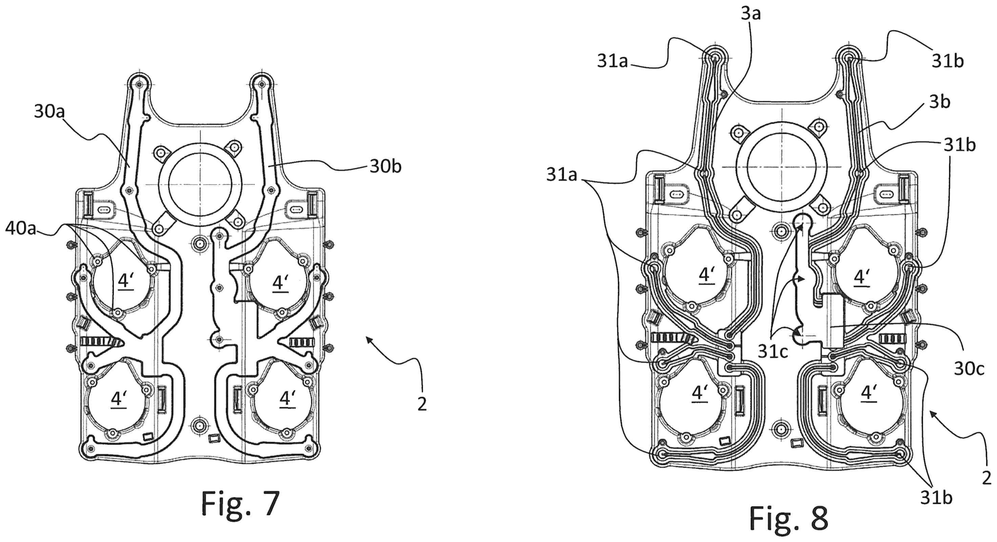

Mit Bezug auf die Figuren 7-13 werden weitere Eigenschaften und Varianten der erfindungsgemäßen Modulträgeranordnung beschrieben, die für sich genommen an einer Modulträgeranordnung realisiert sein können aber auch in beliebiger Kombination vorhanden sein können. Die in den Figuren 7-13 dargestellten Ausführungsformen sind also genauso wenig wie die in den vorangegangenen Figuren auf die jeweils dargestellte Ausführungsform beschränkt.

Bevorzugt sind die Fluidkanäle 3a, 3b in den Modulträger 2 integriert. Dies kann eine vollständige Integration sein oder - wie dies beispielsweise in den Figuren 7 und 8 angedeutet ist - können Kanäle 3a, 3b als Vertiefungen in den Modulträger 2 eingearbeitet sein, welche dann mit einer Abdeckung 30a, 30b, 30c abgedeckt werden.

In Figur 7 sind die im Modulträger 2 integrierten Kanäle 3a, 3b vollständig mit entsprechenden Abdeckungen 30a, 30b abgedeckt. Man erkennt zudem Aussparungen 4', mit Befestigungselementen 40a an deren Rand, an welchen beispielsweise Vibrationselemente 4 (vgl. Beschreibung zu Figur 1) befestigt werden können. Es gibt aber auch Varianten, bei denen nur ein Teil der im Modulträger 2 vorgefertigten Kanäle 3a, 3b verwendet werden; in einem solchen Fall (Figur 8) ist auch nur ein Teil der Kanäle 3b durch eine Abdeckung 30c abgedeckt. In dem gezeigten Beispiel von Figur 8 dienen beispielsweise die Kanäle 3a und 3b hauptsächlich der Installation eines möglichen Massagesystems, während ein Teil des Kanals 3b für eine Lordosenverstellung verwendet wird. 31a und 31b sowie 31c sind im Modulträger 2 angeordnete bzw. vorgeformte Blasenbefestigungsabschnitte. Die Blasenbefestigungsabschnitte 31a, 31b dienen zum Beispiel der Befestigung von Massageblasen, während die Blasenbefestigungsabschnitte 31c der Befestigung von Blasen für die Lordosenverstellung dienen. Je nach angestrebter Ausführung können alle diese genannten Blasenbefestigungsabschnitte 31a bis 31c mit Blasen verbunden sein, denkbar ist genauso, dass nur ein Teil der Blasenbefestigungsabschnitte überhaupt mit Blasen bestückt wird.

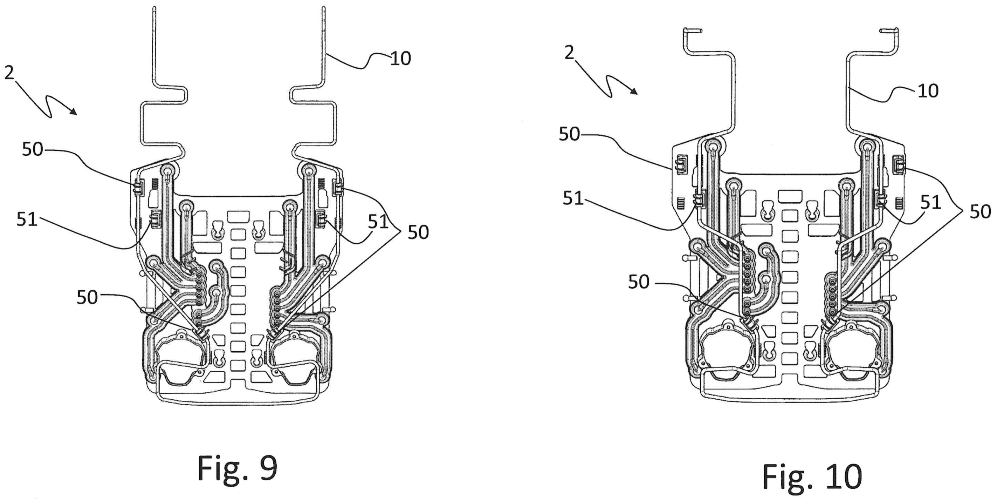

In den Figuren 9 und 10 ist eine Ausführung gezeigt, bei der unterschiedliche Befestigungsabschnitte 50, 51 für einen Draht 10 einer Drahtaufhängung am Modulträger angeordnet bzw. angeformt sind. Drahtaufhängungen dienen dazu, die erfindungsgemäße Modulträgeranordnung bzw. den Modulträger an einem hier nicht dargestellten Strukturteil eines Kraftfahrzeugsitzes anzubinden. Dabei ist eine gewisse Flexibilität oder Elastizität bei dieser Art der Aufhängung gewährleistet. Je nach Fahrzeugtyp und Sitztyp sind an diese Art der Aufhängungen unterschiedliche Anforderungen gestellt. So kann es beispielsweise erforderlich sein, den Draht auch im Hinblick auf die Bestückung des Modulträgers 2 unterschiedlich zu führen, was eine unterschiedliche Drahtbiegung in unterschiedliche Richtungen erfordert. Bauartbedingt kann es daher sein, dass die in Figur 9 dargestellten Befestigungsabschnitte 50 nicht immer mit dem Draht 10 verbunden werden können, weil andere Komponenten diese Verbindung stören oder die gewünschte Elastizität nicht erreicht wird. Wie man in Figur 9 erkennt, sind hier lediglich die Befestigungsabschnitte 50 verwendet, um den Draht 10 zu halten. Bei entsprechend anderer Biegung des Drahtes, also einer anderen Führung des Drahtes 10 kann es erforderlich sein, zusätzliche Befestigungsabschnitte 51 zu verwenden (Figur 10). Um auf diese unterschiedlichen Anforderungen im Hinblick auf eine universelle Ausstattung eines Modulträgers 2 reagieren zu können, schlägt die Erfindung in dem in den Figuren 9 und 10 dargestellten Ausführungsbeispiel vor, verschiedene Befestigungsabschnitte 50, 51 am Modulträger vorzusehen.

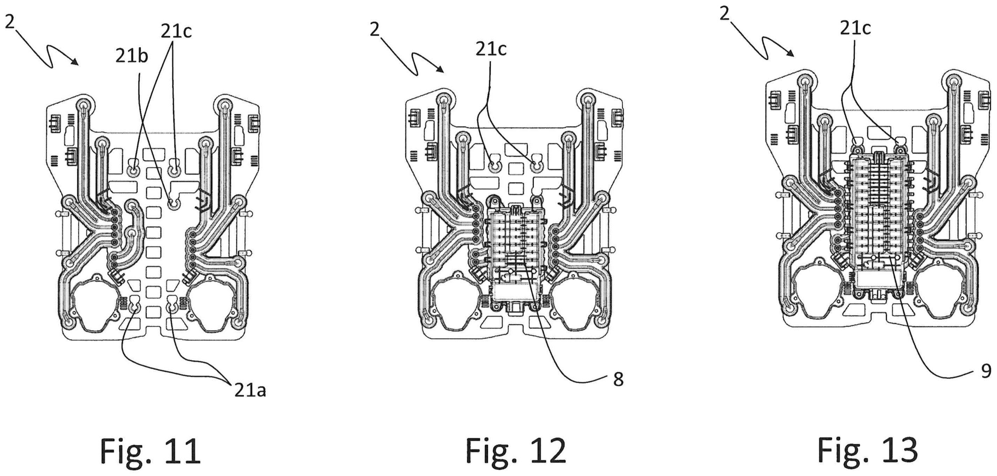

Schließlich ist in den Figuren 11-13 ein Modulträger 2 der erfindungsgemäßen Modulträgeranordnung dargestellt, der unterschiedliche Befestigungsabschnitte 21a bis 21c aufweist. Diese Befestigungsabschnitte dienen der Befestigung unterschiedlicher Ventilblöcke 8, 9. In den in den Figuren 11-13 dargestellten Ausführungsbeispielen dienen die Befestigungsabschnitte 21a und 21b (Figur 11) der Befestigung eines ersten Ventilblocks 8 (Figur 12). Entsprechend dienen hier die Befestigungsabschnitte 21a und 21c (Figur 11) der Befestigung eines hinsichtlich der Ausführung, der Bauform oder der Größe von Ventilblock 8 verschiedenen Ventilblocks 9.

Auf diese Weise kann der Modulträger 2 bereits bei der Herstellung für die Anbringung von Ventilblöcken 8, 9 unterschiedlicher Bauform oder Größe adaptiert sein. Im Fall von Ventilblock 8 sind die Befestigungsabschnitte 21c unbenutzt, im Fall von Ventilblock 9 sind die Befestigungsabschnitte 21b unbenutzt. Grundsätzlich gilt für alle Befestigungsabschnitte, dass diese am Modulträger 2 angeformt, in diesen eingeformt oder am Modulträger 2 befestigt sind.

Die geschilderte Ausführung des erfindungsgemäßen Modulträgers ermöglicht es also daher, eine Vielzahl unterschiedlicher Ausführungsvarianten einer Modulträgeranordnung mit ein und demselben Modulträger zu realisieren, was bei der Herstellung Kosten spart, da lediglich eine Sorte Modulträger herzustellen ist.

## Patentansprüche

1. Modulträgeranordnung (1) zur Anbringung an der Struktur eines Kraftfahrzeugsitzes, wobei die Modulträgeranordnung (1) einen Modulträger (2) aufweist, in welchen Fluidkanäle (3a, 3b) zur Führung von Fluid, bevorzugt Luft, integriert sind, wobei der Modulträger (2) wenigstens einen ersten Befestigungsabschnitt (21; 21a; 21b) und wenigstens einen zweiten Befestigungsabschnitt (21c; 22) aufweist, wobei
i) jeder erste Befestigungsabschnitt (21; 21a; 21b) zum Befestigen von einem ersten Ventilblock (8) am Modulträger (2) und jeder zweite Befestigungsabschnitt (21c; 22) zum Befestigen von einem vom ersten Ventilblock (8) verschiedenen zweiten Ventilblock (9) am Modulträger (2) ausgebildet ist, oder/und
ii) die ersten und zweiten Befestigungsabschnitte (21, 22; 21a; 21b; 21c) so am Modulträger (2) angeordnet sind, dass sie die Befestigung von Ventilblöcken (8, 9) verschiedener Baugrößen oder Modellvarianten am Modulträger (2) ermöglichen.

2. Modulträgeranordnung (1) nach Anspruch 1,
**dadurch gekennzeichnet,**
**dass** an wenigstens einem ersten Befestigungsabschnitt (21) ein erster Ventilblock (8) und/oder an wenigstens einem zweiten Befestigungsabschnitt (22) ein zweiter Ventilblock (9) angebracht ist.

3. Modulträgeranordnung (1) nach einem der vorigen Ansprüche,
**dadurch gekennzeichnet,**
**dass** am Modulträger (2) wenigstens ein dritter Befestigungsabschnitt zur Befestigung einer Fluidpumpe vorhanden ist.

4. Modulträgeranordnung (1) nach Anspruch 3,
**dadurch gekennzeichnet,**
**dass** eine Fluidpumpe am dritten Befestigungsabschnitt angebracht ist.

5. Modulträgeranordnung (1) nach einem der vorigen Ansprüche,
**dadurch gekennzeichnet,**
**dass** am Modulträger (2) im Bereich der einen Enden der integrierten Fluidkanäle (3a, 3b) Blasenbefestigungsabschnitte zur Befestigung von fluidbefüllbaren Blasen (6) am Modulträger (2) und Herstellung einer fluidleitenden Verbindung zwischen den fluidbefüllbaren Blasen (6) und den Fluidkanälen vorhanden sind.

6. Modulträgeranordnung (1) nach Anspruch 5,
**dadurch gekennzeichnet,**
**dass** an wenigstens einem der Blasenbefestigungsabschnitte wenigstens eine fluidbefüllbare Blase (6) angebracht ist.

7. Modulträgeranordnung (1) nach einem der vorigen Ansprüche,
**dadurch gekennzeichnet,**
**dass** die ersten und/oder zweiten Befestigungsabschnitte (21, 22) so angeordnet sind, dass beim Befestigen eines Ventilblocks (8, 9) der jeweilige Ventilblock (8, 9) automatisch mit wenigstens einem der Fluidkanäle (3a, 3b) fluidtechnisch verbunden wird.

8. Modulträgeranordnung (1) nach einem der vorigen Ansprüche,
**dadurch gekennzeichnet,**
**dass** vierte Befestigungsabschnitte (50) am Modulträger (2) angeordnet sind, die zur Aufnahme und Befestigung einer Drahtaufhängung (10) am Modulträger (2) ausgebildet sind.

9. Modulträgeranordnung (1) nach Anspruch 8,
**dadurch gekennzeichnet,**
**dass** von den vierten Befestigungsabschnitten verschiedene fünfte Befestigungsabschnitte (51) am Modulträger (2) angeordnet sind, die zur Aufnahme und Befestigung einer Drahtaufhängung (10) am Modulträger (2) ausgebildet sind.

10. Modulträgeranordnung (1) nach einem der vorigen Ansprüche,
**dadurch gekennzeichnet,**
**dass** die integrierten Fluidkanäle (3a, 3b) teilweise oder vollständig von einer Abdeckung (30a, 30b, 30c) oder einer Mehrzahl Abdeckungen (30a, 30b, 30c) abgedeckt sind.

11. Kraftfahrzeugsitz mit einer Sitzstruktur, an welchem eine Modulträgeranordnung (1) nach einem der vorigen Ansprüche angebracht ist.
